(19) Europäisches Patentamt
European Patent Office
Office européen des brevets

(11) EP 0 783 692 B1

(12) EUROPEAN PATENT SPECIFICATION

(45) Date of publication and mention of the grant of the patent: **25.11.1998 Bulletin 1998/48**

(21) Application number: **95932902.0**

(22) Date of filing: **19.09.1995**

(51) Int Cl.[6]: **G01N 31/22**

(86) International application number: **PCT/IT95/00152**

(87) International publication number: **WO 96/09540 (28.03.1996 Gazette 1996/14)**

(54) **DETERMINATION OF FREE RADICALS**

BESTIMMUNG VON FREIEN RADIKALEN

DETERMINATION DE RADICAUX LIBRES

(84) Designated Contracting States:
**AT BE CH DE DK ES FR GB GR IE LI LU MC NL PT SE**

(30) Priority: **21.09.1994 IT RM940598**

(43) Date of publication of application: **16.07.1997 Bulletin 1997/29**

(73) Proprietor: **DIACRON S.R.L.**
**58100 Grosseto (IT)**

(72) Inventor: **CARRATELLI, Mauro**
**I-58100 Grosseto (IT)**

(74) Representative: **Iannone, Carlo Luigi et al**
**Ing. Barzanò & Zanardo Roma S.p.A.**
**Via Piemonte, 26**
**00187 Roma (IT)**

(56) References cited:
**DE-A- 2 502 467**

- **VOM WASSER, vol. 40, 1973 BERLIN, pages 151-163, A.T.PALIN ET AL. 'Methoden zur Bestimmung des im Wasser vorhandenen freien und gebundenen wirksamen Cholrs, Chlordioxids und Chlorits, Broms, Jods, und Ozons unter Verwendung von Diäthyl-p-Phenylen-diamin (DPD).'**
- **DATABASE WPI Section Ch, Week 9143 Derwent Publications Ltd., London, GB; Class A89, AN 91-315139 & JP,A,03 211 460 ( YONJUN K) , 17 September 1991**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 783 692 B1

## Description

The invention relates to the use of a reagent that allows to make the determination of the free radicals in any kind of clinical chemistry analyser, and thus allows to make such determination in any laboratory, thus being possible to use the standard available instruments.

As it is well known to those skilled in the art, with the term "free radical" it is meant in the literature any kind of chemical species able to exist independently and containing one or more unpaired electrons on the outermost orbital (atomic and/or molecular).

In the recent years, among the various existing free radicals, oxygen has a gained prominence, in the medical field, in view of the role that they can assume for the determination of a tissue damage of different pathological conditions.

In the Anglo - Saxon literature, the free radicals are named ROMs (Oxygen Reactive Metabolites), symbolization that will be used in the following of the present specification, and are characterized in having an odd number of electrons in the oxygen outermost orbit, this fact making them chemically reacting with respect to a great number of biological molecules.

The main ROMs known in the literature are: the O2* anion superoxide; the H2O2 hydrogen peroxide, the organic peroxide radical R-O2*; the R-O* alkoxy radical; the OH* hydroxilic radical; the OHX hypoalous acids, wherein X can be halogen and all the relevant amines.

During recent studies, numerous clinical conditions have been individuated wherein a role of the ROMs has been invoked and recognised. Particularly, it can be cited the inflammatory and post-ischemia diseases of the alimentary tract, the Central Nervous System disorders due to vascular or traumatic disorders, the atherosclerosis and its cardiac complications, some renal disorders, the arthritis deformans and the alcohol induced disorders in some parts of the organism.

However, up today, remarkable difficulties have been encountered in the localisation and determination of the free radicals in the biological samples, so that their patoathogenic role in these diseases have largely deduced on the basis of the effect of antioxidant substances, which, naturally, could have not-specific antiinflammatory effects.

Mainly, although not exclusively, up today the methods employed for the determination of the free radicals are ESR (electron spin resonance), a sophisticated technique used only in research laboratories since it is very expensive, or those based on the use of sophisticated instruments, and thus not adoptable in analysis laboratories for the daily standard determinations.

In view of the above, it appears extremely important to have a reagent like the one proposed according to the present invention that allows to employ a simple and fast method for the determination of free radicals and of their derivatives in order to allow also the monitoring of antioxidant antiinflammatory therapies by analysis that can be performed in the standard laboratories.

The Applicant has determined on an experimental basis that the N,N-diethyl paraphenilendiamine $(C_2H_5)_2$-$NC_6H_4NH_2$), already known for the determination of active chlorine within the waters, if employed in a suitable buffer and with particular concentration and pH conditions, thus determining a chromogen reaction, is able to determine by colour formation not only the chlorine, but also all the products having the feature of the unpaired electron in the outer orbit such as the anion superoxide, the hydrogen peroxide, the hydroxyl radicals, the hypoalous acids and all their amines.

Similar results have been obtained with products of the same category and that are included in the described and claimed general formula.

From the tests performed, it has been thus observed that the reagent according to the invention allows to quantitatively determine the ROMs present in a sample.

The developed colour has an absorption spectrum with two peaks, one at 510 nm and one at 550 nm, as it can be noted from the enclosed graph 1.

Its colour intensity is directly proportional to the concentration of the free radicals present in the sample and perfectly follows the Lambert and Beer's law, as it is evident also from graph 2, either reading at 510 nm or reading at 550 nm is performed.

In case the sample to be analized is comprised of a biologic sample (blood, plasm, serum, liquor, etc.), the ROMs determination by the method employing the reagent according to the invention can be made either with the end read of the colour development (end Point) or with the predetermined time range (Fixed Point), and with a continued kinetic determination.

This is an aspect that greatly differentiates the use of the reagent according to the present invention with respect to all the systems presently known and that make the same particularly advantageous.

In fact, being it possible to use the reagent according to the invention with any analysis method, it is possible to use the same in any laboratory without the need of providing particular apparatuses, but even allowing to use the already available ones.

The method proposed by the Applicant and employing the reagent according to the invention particularly, but not solely, provides, and thus this cannot be considered as a limitation, the use of two separated reagents A and B, wherein A represents the chromogen and B a suitably buffered solution .

The two reagents are mixed with the suitable proportions so as to make a sole reagent as working reagent.

In any case, the two reagents can be used also in two subsequent steps.

It is therefore a specific object of the present invention touse a reagent for the determination of free radicals comprising a chromogen, chosen from the following formula (I)

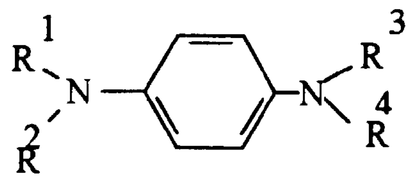

wherein:

R1 = C2H5-; CH3-; H-; X-
R2 = C2H5-; CH3-; H-; X-
R3 = C2H5-; CH3-; H-; X-
R4 = C2H5-; CH3-; H-; X-

wherein X- is chosen among halides,

said chromogen being suitably dissolved in water or other suitable solvent,
and a buffer having a pH value between 3 and 6.9

Preferably, said chromogen and buffer are mixed with a proportion between 1:20 and 1:300, this ratio baing variable for different solution proportions of the chromogen and of the buffer.

According to a first preferred embodiment of the use of the reagent according to the invention, said chromogen comprises 4-aminoparaphenylen-N,N-diethylamine, or its salts.

In a second preferred embodiment of the use of the reagent according to the invention, said chromogen can comprise 4-amino-paraphenylen-N,N-diethylamine sulphate (C10H16N2H2SO4) or its salts.

Still according to the invention, in a third preferred embodiment, said chromogen can comprise 4-diamine-paraphenylen-N,N-diethylenaniline oxalate (C10H16N2C2H2O4) or its salts.

Further, in the use of the reagent according to the invention, said chromogen can comprise 4-amino-paraphenylen-N,N-dimethylamine or its salts.

Always according to the invention, said chromogen can comprise 4-amino-paraphenylen-N,N-dimethylamine sulphate or its salts.

Further, according to the invention, said chromogen can comprise 4-diamine-paraphenylen-N,N-dimetylamine oxalate or its salts.

Preferably, said buffer will have, according to the invention, a pH value between 4 and 5.

Now, some preparation examples for the two reagents making the reagent according to the invention are given in the following.

It must be further underlined how some ratios given between chromogen and buffer can be modified in function of the solubility of the same chromogen and buffer.

REAGENT A - Chromogen

Example A

| Components | Doses relevant to 1,000 ml of A reagent |
|---|---|
| NN diethyl para phenyl diamine sulphate | 1- 200 gr |
| $H_2O$ | up to 1,000 ml |

Example B

| Components | Doses relevant to 1,000 ml of A reagent |
| --- | --- |
| NN diethyl para phenyl diamine sulphate | 1- 150 gr |
| CH3-COOOH | up to 1,000 ml |

Example C

| Components | Doses relevant to 1,000 ml of A reagent |
| --- | --- |
| NN diethyl para phenylen diamine oxalate | 1 - 190 gr |
| H2O bi-distilled | up to 1,000 ml |

REAGENT B - Buffer

Example 1 (can be used with the chromogen according to the examples A and C)
Acetate buffer between pH 3 and pH 6.9
Example 2 (can be used with the chromogen according to the example B)
Sodium hydroxide from 0.001 N and 1 N
Example 3 (can be used with the chromogen according to the examples A and B)
Posphate buffer between pH 3 and pH 6.9
Example 4 (can be used with the chromogen according to the examples A and B)
Pipes buffer between pH 3 and pH 6.9
Example 5 (can be used with the chromogen according to the examples A and B)
Epes buffer between pH 3 and pH 6.9

Will be in the following described for illustrative, purposes a method for the preparation of the reagent according to the invention.

Working reagent preparation

The Reagent A and the Reagent B are mixed with a ratio between 1:300 and 1:100, preferably 1:200. For the chromogen according to example B, the preferred ratio will be 1:40.

**Using method with end reaction**

1 ml of working reagent (A+B) are mixed with 5 ml of biologic sample (bloob, serum, plasm, liquor, etc.).
The solution is left within thermostat at 37°C for 1 hour.
The reading is performed between 480 and 570 nm. The test is executed parallelly using a sample having a known concentration and applying the classic formula:

C sample = (A sample / A standard) x C standard.

**Use method with Fixed Time reaction**

The reaction temperature is equal to 37°C.
1 ml of working reagent is mixed with 20 ml of sample.
The reading occurs after 30". The initial absorbance is comprised between 480 and 570 nm.
An incubation for 5' at 37°C is realized.
It then read the absorbance again.
The calculation is made with the formula:

C sample = ( final A - initial A) sample / (final A - initial A) standard x c standard.

**Use method with continuous kinetic**

The reaction temperature is of 37°C (35°C - 30°C - 20°C) (really the analysis temperature is not a fundamental parameter).

The reading is made between 480 and 570 nm.

The buffer volume is 0,1 ml, the serum volume is 10 l, and the chromogen volume is 10 l.

Now the reaction rate remains constant for many minutes, allowing the kinetic determination of the ROMs.

Provoking the variation of D.Olminute of a sample having a known concentration, the concentration of the ROMs within the sample is determined as follows:

Conc (sample): D.O/minute sample x Conc. Standard
D.O/minute standard

## Claims

**1.** Use of a reagent comprising a chromogen, chosen from the following formula (I)

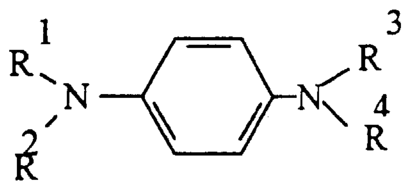

wherein:

R1 = C2H5-; CH3-; H-; X-
R2 = C2H5-; CH3-; H-; X-
R3 = C2H5-; CH3-; H-; X-
R4 = C2H5-; CH3-; H-; X-

wherein X- is chosen among halides,

said chromogen being suitably dissolved in water or other suitable solvent,
and a buffer having a pH value between 3 and 6.9, for the determination of free radicals.

**2.** Use of a reagent according to claim 1, characterized in that said chromogen and buffer are mixed with a volume proportion between 1:20 and 1:300.

**3.** Use of a reagent according to claim 1 or 2, characterized in that said chromogen comprises 4-amino-paraphenylen-N,N-diethylamine (C10H16N2), or its salts.

**4.** Use of a reagent according to claim 1 or 2, characterized in that said chromogen comprises 4-amino-paraphenylen-N,N-diethylamine sulphate (C10H16N2H2SO4) or its salts.

**5.** Use of a reagent according to claim 1 or 2, characterized in that said chromogen comprises 4-diamine-paraphenylen-N,N-diethylenaniline oxalate (C10H16N2C2H2O4) or its salts.

**6.** Use of a reagent according to claim 1 or 2, characterized in that said chromogen comprises 4-amino-paraphenylen-N,N-dimethylamine or its salts.

**7.** Use of a reagent according to claim 1 or 2, characterized in that said chromogen comprises 4-amino-paraphenylen-N,N-diMethylamine sulphate or its salts.

**8.** Use of a reagent according to claim 1 or 2, characterized in that said chromogen comprises 4-diamine-paraphenylen-N,N-dimethylamine oxalate or its salts.

**9.** Use of a reagent according to one of the preceding claims 10-17, characterized in that said buffer has a pH value between 4 and 5.

**10.** Method for the determination of free radicals characterized in that it provides the use of a reagent comprising a chromogen, chosen from the following formula (I)

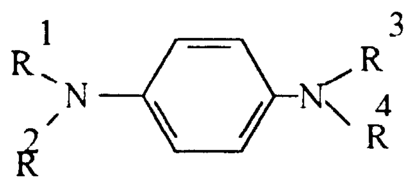

wherein:

R1 = CH5-; CH3-; H-; X-
R2 = C2H5-; CH3-; H-; X-
R3 = C2H5-; CH3-; H-; X-
R4 = C2H5-; CH3-; H-; X-

wherein X- is chosen among halides,

said chromogen being suitably dissolved in water or other suitable solvent,
and a buffer having a pH value between 3 and 6.9.

**11.** Method according to claim 10, characterized in that said chromogen and buffer are mixed with a volume proportion between 1:20 and 1:300.

**12.** Method according to claim 10 or 11, characterized in that said chromogen comprises 4-amino-paraphenylen-N,N-diethylamine (C10H16N2), or its salts.

**13.** Method according to claim 10 or 11, characterized in that said chromogen comprises 4-amino-paraphenylen-N,N-diethylamine sulphate (C10H16N2H2SO4) or its salts.

**14.** Method according to claim 10 or 11, characterized in that said chromogen comprises 4-diamine-paraphenylen-N, N-diethylenanilina oxalate (C10H16N2C2H2O4) or its salts.

**15.** Method according to claim 10 or 11, characterized in that said chromogen comprises 4-amino-paraphenylen-N,N-dimethylamine or its salts.

**16.** Method according to claim 10 or 11, characterized in that said chromogen comprises 4-amino-paraphenylen-N,N-diMethylamine sulphate or its salts.

**17.** Method according to claim 10 or 11, characterized in that said chromogen comprises 4-diamine-paraphenylen-N, N-dimetylamine oxalate or its salts.

**18.** Method according to one of the preceding claims 10-17, characterized in that said buffer has a pH value between 4 and 5

**Patentansprüche**

**1.** Anwendung eines Reagents, das ein aus der folgenden Formel ausgewähltes Chromogen:

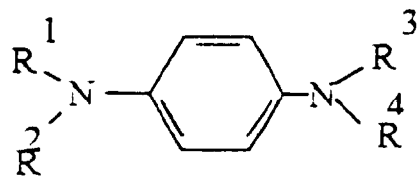

worin:

R1 = CH5-; CH3-; H-; X-
R2 = C2H5-; CH3-; H-; X-
R3 = C2H5-; CH3-; H-; X-
R4 = C2H5-; CH3-; H-; X-

wobei X unter Halogeniden ausgewählt ist und wobei das genannte Chromogen in angebrachter Weise im Wasser oder in einem anderen angebrachten Lösungsmittel aufgelöst ist,
und einen Puffer mit einem pH-Wert zwischen 3 und 6,9 zur Bestimmung von freien Resten enthält.

2. Anwendung eines Reagents nach Anspruch 1, dadurch gekennzeichnet, dass die vorgenannten Chromogen und Puffer in einem Volumenverhältnis zwischen 1:20 und 1:300 vermischt sind.

3. Anwendung eines Reagents nach Anspruch 1 oder 2, dadurch gekennzeichnet, dass das vorgenannte Chromogen 4-Amino-Paraphenylen-N,N-Diäthylamin (C10H16N2) oder dessen Salze enthält.

4. Anwendung eines Reagents nach Anspruch 1 oder 2, dadurch gekennzeichnet, dass das vorgenannte Chromogen 4-Amino-Paraphenylen-N,N-Diäthylamin-Sulphat (C10H16N2H25O4) oder dessen Salze enthält.

5. Anwendung eines Reagents nach Anspruch 1 oder 2, dadurch gekennzeichnet, dass das vorgenannte Chromogen 4-Amino-Paraphenylen-N,N-Diäthylamin-Oxalat (C10H16N2C2H2O4) oder dessen Salze enthält.

6. Anwendung eines Reagents nach Anspruch 1 oder 2, dadurch gekennzeichnet, dass das vorgenannte Chromogen 4-Amino-Paraphenylen-N,N-Dimethylamin oder dessen Salze enthält.

7. Anwendung eines Reagents nach Anspruch 1 oder 2, dadurch gekennzeichnet, dass das vorgenannte Chromogen 4-Amino-Paraphenylen-N,N-Dimethylamin-Sulphat oder dessen Salze enthält.

8. Anwendung eines Reagents nach Anspruch 1 oder 2, dadurch gekennzeichnet, dass das vorgenannte Chromogen 4-Amino-Paraphenylen-N, N-Dimethylamin-Oxalat oder dessen Salze enthält.

9. Anwendung eines Reagents nach je einem der vorhergehenden Ansprüche dadurch gekennzeichnet, dass der vorgenannte Puffer einen pH-Wert zwischen 4 und 5 hat.

10. Verfahren zur bestimmung von freien Resten, dadurch gekennzeichent, dass es die Anwendung eines Reagentes vorsich, das ein aus der folgenden Formel ausgewähltes Chromogen

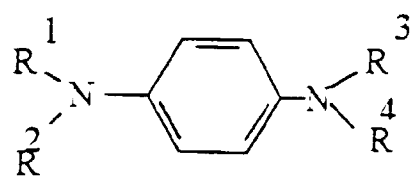

worin

R1 = CH5-; CH3-; H-; X-
R2 = C2H5-; CH3-; H-; X-

R3 = C2H5-; CH3-; H-; X-
R4 = C2H5-; CH3-; H-; X-

wobei X unter halogeniden ausgewählt ist und wobei das vorgenannte Chromogen in angebrachter Weise im Wsser oder in einem anderen angebrachten Lösungsmittel aufgelöst ist
und einen Puffer mit einem pH-Wert zwischen 3 und 6,9 enthält.

**11.** Verfahren nach Anspruch 10, dadurch gekennzeichnet, dass die vorgenannten Chromogen und Puffer in einem Volumenverhältnis zwischen 1:20 und 1:300 vermischt sind.

**12.** Verfahren nach Anspruch 10 oder 11, dadurch gekennzeichnet, dass das vorgenannte Chromogen 4-Amino-Paraphenylen-N,N-Diäthylamin (C10H16N2) oder dessen Salze enthält.

**13.** Verfahren nach Anspruch 10 oder 11, dadurch gekennzeichnet, dass das vorgenannte Chromogen 4-Amino-Paraphenylen-N,N-Diäthylamin-Sulphat (C10H16N2H2SO4) oder dessen Salze enthält.

**14.** Verfahren nach Anspruch 10 oder 11, dadurch gekennzeichnet, dass das vorgenannte Chromogen 4-Amino-Paraphenylen-N,N-Diäthylamin-Oxalat (C10H16N2C2H2O4) oder dessen Salze enthält.

**15.** Verfahren nach Anspruch 10 oder 11, dadurch gekennzeichnet, dass das vorgenannte Chromogen 4-Amino-Paraphenylen-N,N-Dimethylamin oder dessen Salze enthält.

**16.** Verfahren nach Anspruch 10 oder 11, dadurch gekennzeichnet, dass das vorgenannte Chromogen 4-Amino-Paraphenylen-N,N-Dimethylamin-Sulphat oder dessen Salze enthält.

**17.** Verfahren nach Anspruch 10 oder 11, dadurch gekennzeichnet, dass das vorgenannte Chromogen 4-Amino-Paraphenylen-N,N-Dimethylamin-Oxalat oder dessen Salze enthält.

**18.** Verfahren nach je einem der vorhergehenden Ansprüche, dadurch gekennzeichnet, dass der vorgenannte Puffer einen pH-Wert zwischen 4 und 5 hat.

**Revendications**

**1.** Usage d'un réactif comprenant un chromogène, choisi de la formule suivante (1)

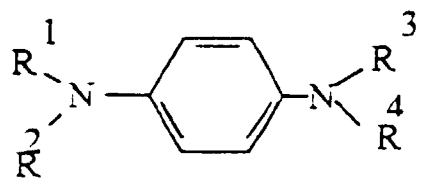

dans la quelle:

R1 = CH5-; CH3-; H-; X-
R2 = C2H5-; CH3-; H-; X-
R3 = C2H5-; CH3-; H-; X-
R4 = C2H5-; CH3-; H-; X-

ou X est choisi entre les halogénures, ledit chromogène etant fondu opportunément dans l'eau ou un autre solvant convenable
et une solution tampon ayant un valeur pH entre 3 et 6,9 pour la détermination de radicaux libres.

**2.** Usage d'un réactif selon la revendication 1, caractérisé en ce que ledit chromogène et ladite solution tampon sont melangés dans une proportion volumétrique entre 1:20 et 1:300.

**3.** Usage d'un réactif selon la revendication 1 ou 2, caractérisé en ce que ledit chromogèn comprend 4-amino-paraphenylen-N,N-diéthylamine (C10H16N2) ou ses sels.

**4.** Usage d'un réactif selon la revendication 1 ou 2, caractérisé en ce que ledit chromogèn comprend 4-amino-paraphénylen-N,N-diéthylamine sulfate (C10H16N2H2SO4) ou ses sels.

**5.** Usage d'un réactif selon la revendication 1 ou 2, caractérisé en ce que ledit chromogèn comprend 4-amino-paraphénylen-N,N-diéthylènaniline oxalate (C10H16N2C2H2SO4) ou ses sels.

**6.** Usage d'un réactif selon la revendication 1 ou 2, caractérisé en ce que ledit chromogèn comprend 4-amino-paraphénylèn-N,N-dimethylamine ou ses sels.

**7.** Usage d'un réactif selon la revendication 1 ou 2, caractérisé en ce que ledit chromogèn comprend 4-amino-paraphénylèn-N,N-dimethylamine sulfate ou ses sels.

**8.** Usage d'un réactif selon la revendication 1 ou 2, caractérisé en ce que ledit chromogèn comprend 4-diamino-paraphénylèn-N,N-diméthylamine oxalate ou ses sels.

**9.** Usage d'un réactif selon l'une quelconque des revendications précédents, caractérisé en ce que ladite solution tampon a un valeur de pH entre 4 et 5.

**10.** Méthode pour la détermination de radicaux libres, caractérisé en ce qu'il prévoit l'usage d'un réactif comprenant un chromogène, choisi de la formule suivante (1)

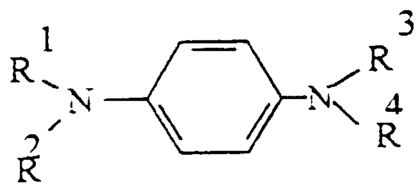

dans la quelle:

R1 = CH5-; CH3-; H-; X-
R2 = C2H5-; CH3-; H-; X-
R3 = C2H5-; CH3-; H-; X-
R4 = C2H5-; CH3-; H-; X-

ou X est choisi entre les halogénures, ledit chromogène etant fondu opportunément dans eau ou un autre solvant convenable et une solution tampon ayant un valeur pH entre 3 et 6,9 pour la détermination de radicaux libres.

**11.** Méthode selon la revendication 10, caractérisée en ce que ledit chromogène et ladite solution zampou sont melanés dans une proportion volumétrique entre 1:20 et 1:300.

**12.** Méthode selon la revendication 10 ou 11, caractérisée en ce que ledit chromogèn comprend 4-amino-paraphénylèn-N,N-diéthylamine (C10H16N2) ou ses sels.

**13.** Méthode selon la revendication 10 ou 11, caractérisé en ce que ledit chromogèn comprend 4-amino-paraphénylèn-N,N-diethylamine sulfate (C10H16N2H2SO4) ou ses sels.

**14.** Méthode selon la revendication 10 ou 11, caractérisé en ce que ledit chromogèn comprend 4-amino-paraphénylèn-N,N-diéthylènaniline oxalate (C10H16N2C2H2SO4) ou ses sels.

**15.** Méthode selon la revendication 10 ou 11, caractérisé en ce que ledit chromogèn comprend 4-amino-paraphénylèn-N, N-dimethylamine ou ses sels.

**16.** Méthode selon la revendication 10 ou 11, caractérisé en ce que ledit chromogèn comprend 4-amino-paraphénylèn-N,N-dimethylamine sulfate ou ses sels.

**17.** Méthode selon la revendication 10 ou 11, caractérisé en ce que ledit chromogèn comprend 4-diamino-paraphénylèn-N,N-diméthylamine oxalate ou ses sels.

**18.** Méthode selon l'une quelconque des revendications précédentes, caractérisée en ce que ladite solution tampon a un valeur pH entre 4 et 5.

Graph 1

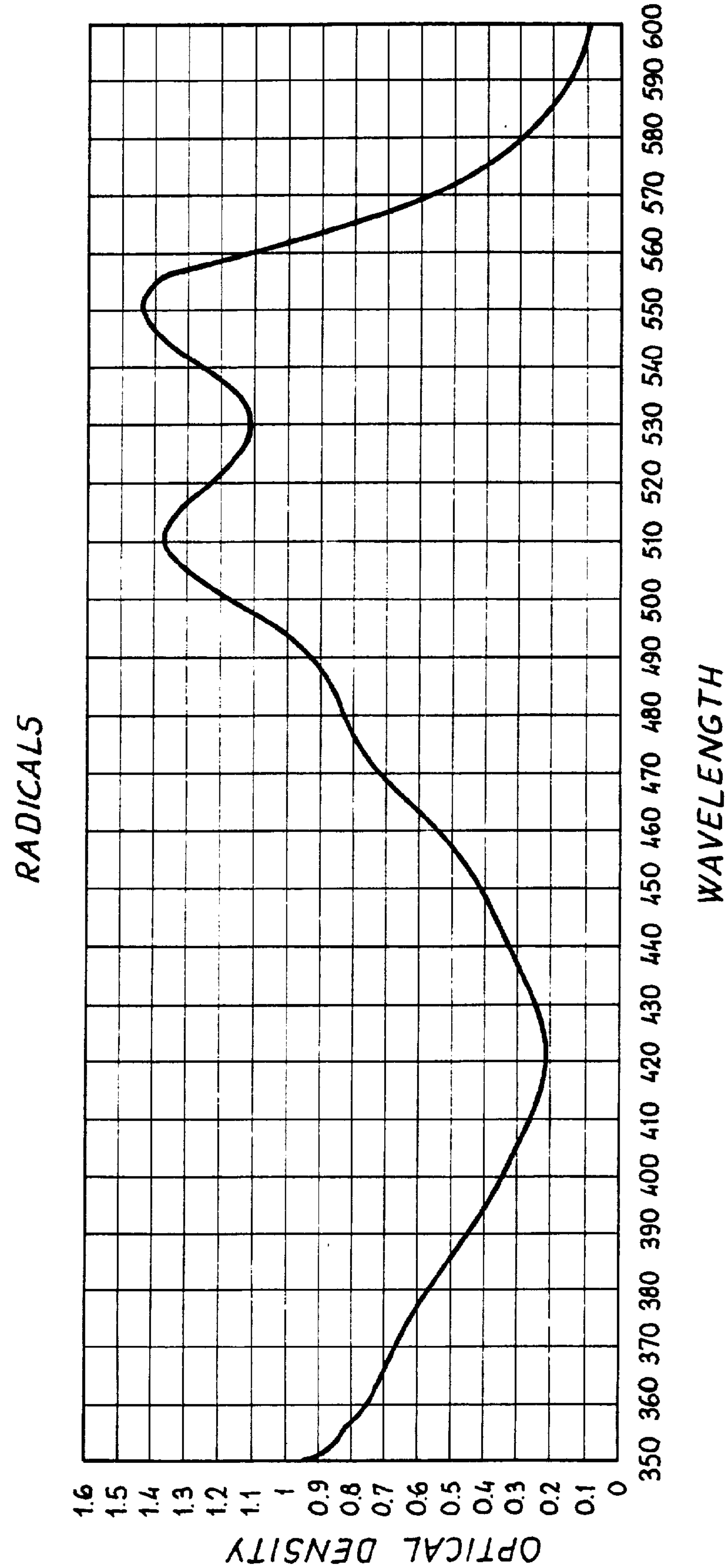
RADICALS
WAVELENGTH
OPTICAL DENSITY
350 360 370 380 390 400 410 420 430 440 450 460 470 480 490 500 510 520 530 540 550 560 570 580 590 600
1.6 1.5 1.4 1.3 1.2 1.1 1 0.9 0.8 0.7 0.6 0.5 0.4 0.3 0.2 0.1 0

Graph 2

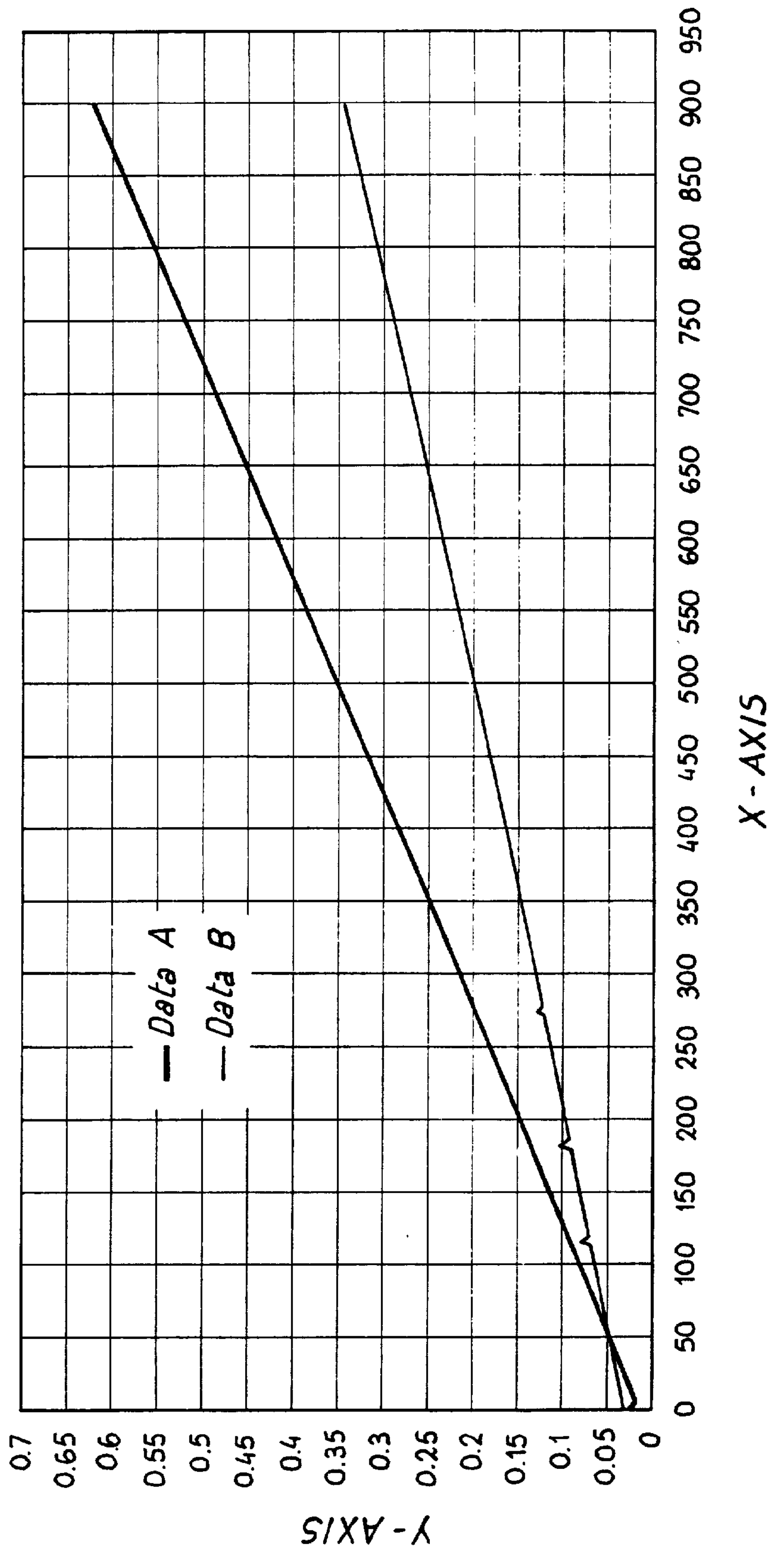
Data A
Data B
X - AXIS
Y - AXIS
0
50
100
150
200
250
300
350
400
450
500
550
600
650
700
750
800
850
900
950
0
0.05
0.1
0.15
0.2
0.25
0.3
0.35
0.4
0.45
0.5
0.55
0.6
0.65
0.7